# EUROPEAN PATENT SPECIFICATION

(11) **EP 1 338 413 B1**
(45) Date of publication and mention of the grant of the patent: **21.11.2007**
(21) Application number: 03003196.7
(22) Date of filing: 20.02.2003
(51) Int. Cl.: B32B 3/12, B32B 27/00, B65D 81/02

(54) **Laminated cushioning article having recycled polyester barrier layer**
Luftkissenlaminat mit einem Barrierschicht aus recycliertem Polyester
Produit laminé à cuisson d'air ayant une couche barrière de résine de polyester recyclé

(30) Priority: 25.02.2002 US 82635
(43) Date of publication of application: 27.08.2003
(73) Proprietor: Sealed Air Corporation (US), Saddle Brook, New Jersey 07663 (US)
(72) Inventor: Kannankeril Charles, North Caldwell, NJ 07006 (US); Freundlich Richard, Plainsboro, NJ 08536 (US)
(74) Representative: UEXKÜLL & STOLBERG

(56) References cited:
- WO-A-89/00919
- US-A- 3 392 081
- US-A- 4 096 306
- US-A- 4 551 379

## Description

### Field Of The Invention

The present invention relates generally to a cellular cushioning article made from laminated films, and methods of making such a cellular cushioning article. The cells of the cushioning article are either filled with fluid at the time of lamination of the films, or a series of uninflated cells are formed during lamination, these cells being inflatable through an inflation channel which connects a plurality of cells in a series.

### Background Of The Invention

Commercial Bubble Wrap^{®} cushioning utilizes two films which are laminated together. Usually, only one of the films is embossed, i.e., thermoformed in a manner to provide a plurality of protrusions when viewed from one side of the film, the protrusions being cavities when viewed from the other side of the film. Generally, these protrusions are regularly spaced and have a cylindrical shape, with a round base and a domed top. The formed film is generally laminated to a flat film in order to form the air cellular product. In another version, two formed films are laminated to one another to form the cellular product.

In order to provide the air cellular product with fluid-retention properties, e.g., air-retention properties, both films which are laminated together have a barrier layer. In the past, the films used to make Bubble Wrap^{®} cushioning have included a polyamide barrier layer and polyolefin layers on either side of the polyamide layer. While the polyolefin layers are present so that the films can be heat-sealed to one another, the polyamide layer is present because polyamide has a crystalline structure which retards the rate of gas transmission through the film. However, polyamide is a relatively expensive polymer. It would be desirable to provide the film with a barrier layer utilizing a less expensive polymer.

### Summary of the Invention

It has been discovered that recycled polyester can be used as a barrier layer in a multilayer film for use in making an air cellular cushioning article. It has been discovered that recycled polyester can be coextruded as an inner layer in combination with polyolefin polymer used in the outer layers of the film. It has been found that recycled polyester can be processed (i.e., extruded, formed, etc.) about 14°C (25°F) lower than the temperature at which virgin polyester can be processed. This 14°C (25°F) difference in processing temperature is compatible with the processing of the polyolefin-based polymers present in the outer heat seal layers of the multilayer film. The elevated processing temperature of virgin polyester has poor compatibility properties when being processed with considerably lower melting olefin-based polymers.

Moreover, it has been discovered that the recycling of polyester, although lowering the molecular weight of the polyester (and thereby lowering the processing temperature relative to virgin polyester), does not significantly reduce the barrier properties of the resulting barrier layer. The layer of recycled polyester serves as a barrier to air, especially as a barrier to atmospheric nitrogen, oxygen, carbon dioxide, etc. The barrier layer is needed because air-filled cushioning cells are subjected to stress during use, causing "creep", i.e., a loss of gas from the cell, rendering the cell less effective in its cushioning value. In other words, the barrier layer helps to retain gas within each cell during use. Moreover, recycled polyester is significantly less expensive than virgin polyester. Preferred film structures are five-layer films having outer layers containing a heat-sealable polyolefin with a core layer containing the recycled polyester, and intermediate tie layers between the core layer and the polyolefin layers. The tie layers contain a polymer capable of adhering the polyolefin to the polyester, such as anhydride modified polymer (e.g., anhydride modified linear low density polyethylene).

In addition to conventional cushioning articles such as thermoformed sealed laminate cushioning articles, the present invention includes the use of recycled polyester in inflatable cushioning articles which can be shipped to the end-user uninflated, thereafter being inflated immediately before use. Such inflatable cushioning articles are typically made from two flat, unformed heat-sealable films which are fused together in discrete areas to form one or more inflatable chambers.

Conventional methods of making cushioning articles, such as Bubble Wrap^{®} cushioning, use a vacuum source to deform polymer film to form bubbles or pockets that can be filled with air (or other gases) to form bubbles. Such products can be made using a heated drum having recesses connected to a vacuum source. When vacuum is applied, each of various regions of the heated film in contact with the drum is drawn into a recess on the drum. Those regions of the heated film which are drawn into the recesses are deformed and thinned by the vacuum drawing process. One side of the resulting formed offers a flat surface for lamination thereto, i.e., has a flat ground region with spaced concavities from the forming process, while the other side does not offer a flat surface for lamination, but rather has formed protrusions thereon with an unavailable (i.e., for lamination) flat ground at the base of the protrusions. A second film, which preferably is a flat film, i.e., not thermoformed, is fused to the "flat side" of the formed film, resulting in a plurality of sealed, air-filled "bubbles." Preferably, the fusion is via heat-sealing.

Conventional cushion fabricating processes also include a first stage film extrusion step, an optional second stage film forming step, and a third stage film lamination step, with the stages being carried out in a single, integrated process, as disclosed in U.S. Patent No. 3,294,387, to Chavannes, entitled "Laminated Cellular Material", as well as U.S. Serial No. 09/934,732, to Kannankeril et al, entitled "Integrated Process for Making Inflatable Article". In the first stage, polymer films are extruded by conventional techniques known to those in the art of polymer film fabrication. In the second stage, one or more of the films are formed by the vacuum forming technique described above, and two films are combined to formed sealed "bubbles", according to heat sealing methods that are known to those in the art of polymer film sealing techniques.

As a first aspect, the present invention is directed to a cellular cushioning article comprising (A) a first multilayer film having first and second outer layers each of which contains an olefin-based polymer, and an inner O₂-barrier layer; and (B) a second multilayer film having first and second outer layers each of which contains an olefin-based polymer, and an inner O₂-barrier layer. The first multilayer film is laminated to the second multilayer film so that a plurality of cells are formed between the first multilayer film and the second multilayer film. The inner O₂-barrier layer in the first film, and/or the inner O₂-barrier layer in the second film, contain recycled polyester.

In at least one of the first and second multilayer films, each of the outer layers of both the first film and the second film preferably comprise at least one member selected from the group consisting of low density polyethylene, linear low density polyethylene, very low density polyethylene, and homogeneous ethylene/alpha-olefin copolymer.

Preferably, the first film and/or the second film further comprise a tie layer between the first outer layer and the barrier layer, and a tie layer between the second outer layer and the barrier layer. Preferably, the first film and/or the second film have a symmetrical layer structure, in terms of composition and/or layer thickness.

Preferably, one or more of the tie layers comprise at least one member selected from the group consisting of anhydride-modified polymer (e.g., ethylene/unsaturated ester copolymer, and ethylene/unsaturated acid copolymer, and anhydride-modified ethylene/alpha-olefin copolymer such as anhydride-modified linear low density polyethylene.

In an alternative preferred inflatable cushioning article, the first multilayer film is a flat, unformed film and the second multilayer film is a flat, unformed film. Preferably, the first and second films are sealed to one another to form a plurality of cell series, each of the cell series containing a plurality of cells and a passageway connecting the cells to one another in series. Each series has a dead-end, with the passageway and cells in the series being inflated by an inflation fluid. After being inflated, the passageway is sealed shut so that the cells in the series remain inflated.

In another preferred inflatable cushioning article, a plurality of discrete cavities are formed into the first film at spaced intervals having a ground region therebetween, with the second film being a flat film adhered to the first film in the ground region, with the first and second films encapsulating a fluid within each of the discrete cavities. Alternatively, a plurality of discrete cavities are formed at spaced intervals into both the first film and the second film, each of the films having a ground region between the discrete cavities, with at least a portion of the ground regions of the films being adhered to one another, with the cavities of the first and second films containing a fluid therewithin. The cavities on the first and second films can be of identical size and spacing with respect to one another, or of different size and/or spacing. The cavities on the first and second films can be aligned with one another (i.e., so that the cavities on the first film overlap with the cavities on the second film), leaving the ground regions also in alignment with one another. Alternatively, the cavities can be non-aligned with one another, or partially-aligned with one another.

In one embodiment, the barrier layer of the first film and/or the second film comprises a blend of recycled polyethylene terephthalate and virgin polyethylene terephthalate.

As a second aspect, the present invention is directed to a process for making a cushioning article, comprising the steps of: (A) extruding a first multilayer film having first and second outer layers each of which contains an olefin-based polymer, and an inner barrier layer containing recycled polyester; and (B) extruding a second multilayer film having first and second outer layers each of which contains an olefin-based polymer, and an inner barrier layer containing recycled polyester; and (C) adhering the first and second multilayer films to one another so that a plurality of cells are formed.

In one preferred embodiment, the process further comprises forming a plurality of discrete cavities in the first film at spaced intervals having a ground region therebetween. The cavities are formed after extruding the first multilayer film but before adhering the first multilayer film to the second multilayer film. The ground region of the first film is then adhered to the second film, so that upon adhering the first and second multilayer films to one another, the first and second films together encapsulate a fluid within each of the discrete cavities. Preferably, the forming is carried out by passing the film over a forming roller which draws discrete regions of the film into forming cavities by evacuating atmosphere from regions between the film and the surface of the forming cavity. Preferably, the fluid is air.

In a variation of this process, a plurality of discrete cavities are formed into both the first multilayer film and the second multilayer film, the plurality of discrete cavities being at spaced intervals having a ground region therebetween. The forming is carried out after extruding the first and second multilayer films but before adhering the first multilayer film to the second multilayer film, with the ground region of the first film being adhered to the ground region of the second film, so that upon adhering the first and second multilayer films to one another, the first and second films together encapsulate a fluid within the each of the discrete cavities. Preferably, the ground region of the first film is heat sealed to the ground region of the second film.

In another embodiment of the process, the first and second films are heat sealed to one another to form a series of cells, each of the series of cells containing a plurality of cells and a passageway connecting the cells to one another, so that an inflatable article is produced. Each series of cells has a dead-end. The passageway and cells in the series are capable of being inflated by an inflation fluid. The passageway is capable of being sealed shut so that the cells in each of the series can remain inflated. Preferably, the inflatable article has an open skirt along one machine-direction edge.

### Brief Description Of The Drawings

The numerous features and advantages of the invention are better understood by those skilled in the art by reference to the accompanying detailed description and figures, in which:
FIG. 1 is an exploded perspective view of a first preferred cushioning article in accordance with the present invention.
FIG. 2 is a cross-sectional view through section 2-2 of Figure 1.
FIG. 3 is a schematic of a process for making a first preferred embodiment of a cushioning article in accordance with the present invention.
FIG. 4 is a perspective view of an alternative preferred embodiment of an inflatable cushioning article in accordance with the present invention.
FIG. 5 is a top lay-flat view of an assembled embodiment which corresponds with the embodiment of FIG. 4.
FIG. 6 is a is a schematic of a process for making the inflatable cushioning article of FIG. 4 and FIG. 5.

### Detailed Description

As used herein, the term "film" is used in a generic sense to include plastic web, regardless of whether it is film or sheet. Preferably, films of and used in the present invention have a thickness of 0.25 mm or less. As used herein, the term "package" refers to packaging materials used in the packaging of a product.

As used herein, the term "polyolefin" refers to any polymerized olefin, which can be linear, branched, cyclic, aliphatic, aromatic, substituted, or unsubstituted. More specifically, included in the term polyolefin are homopolymers of olefin (e.g., high density polyethylene and low density polyethylene), copolymers of olefin, copolymers of an olefin and an non-olefinic comonomer copolymerizable with the olefin, such as vinyl monomers and modified polymers thereof. Specific examples include polyethylene homopolymer, polypropylene homopolymer, polybutene, ethylene/alpha-olefin copolymer, propylene/alpha-olefin copolymer, butene/alpha-olefin copolymer, ethylene/vinyl acetate copolymer, ethylene/ethyl acrylate copolymer, ethylene/butyl acrylate copolymer, ethylene/methyl acrylate copolymer, ethylene/acrylic acid copolymer, ethylene/methacrylic acid copolymer, modified polyolefin resin, ionomer resin, polymethylpentene, etc. Modified polyolefin resin is inclusive of modified polymer prepared by copolymerizing the homopolymer of the olefin or copolymer thereof with an unsaturated carboxylic acid, e.g., maleic acid or fumaric acid, or a derivative thereof such as the anhydride, ester or metal salt. It could also be obtained by incorporating into the olefin homopolymer or copolymer, an unsaturated carboxylic acid, e.g., maleic acid or fumaric acid, or a derivative thereof such as the anhydride, ester or metal salt.

As used herein, the phrase "ethylene alpha-olefin copolymer", and "ethylene/alpha-olefin copolymer", refer to such heterogeneous materials as linear low density polyethylene (LLDPE), and very low and ultra low density polyethylene (VLDPE and ULDPE); and homogeneous polymers such as metallocene-catalyzed EXACT (TM) linear homogeneous ethylene/alpha olefin copolymer resins obtainable from the Exxon Chemical Company, of Baytown, Tex., and TAFMER (TM) linear homogeneous ethylene/alpha-olefin copolymer resins obtainable from the Mitsui Petrochemical Corporation. All these materials generally include copolymers of ethylene with one or more comonomers selected from C₄ to C₁₀ alpha-olefin such as butene-1 (i.e., 1-butene), hexene-1, octene-1, etc. in which the molecules of the copolymers comprise long chains with relatively few side chain branches or cross-linked structures. This molecular structure is to be contrasted with conventional low or medium density polyethylenes which are more highly branched than their respective counterparts. The heterogeneous ethylene/alpha-olefin commonly known as LLDPE has a density usually in the range of from about 0.91 grams per cubic centimeter to about 0.94 grams per cubic centimeter. Other ethylene/alpha-olefin copolymers, such as the long chain branched homogeneous ethylene/alpha-olefin copolymers available from The Dow Chemical Company, known as AFFINITY (TM) resins, are also included as another type of homogeneous ethylene/alpha-olefin copolymer useful in the present invention.

As used herein, the term "barrier", and the phrase "barrier layer", as applied to films and/or film layers, is used with reference to the ability of a film or film layer to serve as a barrier to one or more gases. In the packaging art, oxygen (i.e., gaseous O₂) barrier layers have, in general, included, for example, ethylene/vinyl alcohol copolymer, polyvinyl chloride, polyvinylidene chloride, polyamide, polyester, polyacrylonitrile, etc. However, in the present invention the barrier layer comprises recycled polyester.

As used herein, the phrase "tie layer" refers to any internal layer having the primary purpose of adhering two layers to one another. Tie layers can comprise any polymer having a polar group grafted thereon, so that the polymer is capable of covalent bonding to polar polymers such as polyester while at the same time being capable of bonding to nonpolar polymers such as polyolefin. Exemplary tie layer polymers include anhydride-modified polyolefin (especially anhydride-modified linear low density polyethylene), ethylene/unsaturated ester copolymer (e.g., vinyl acetate copolymer, ethylene/butyl acrylate copolymer, ethylene/methyl acrylate copolymer), ethylene/unsaturated acid copolymers (e.g., ethylene/acrylic acid copolymer, ethylene/methacrylic acid copolymer).

As used herein, the term "polyester" is inclusive of poly(ethylene terephthalate), poly(butylene terephthalate), poly(cyclohexane-1,4-dimethylene terephthalate), poly(4,4'-isopropylidine-diphenyl carbonate), poly(4,4' -carbonato-2,2-diphenylpropane), as well as other polyesters. The term "polyester" is inclusive of both virgin polyester as well as recycled polyester.

The article of the present invention contains recycled polyester. While the recycled polyester can make up from 0.1 to 100 weight percent of the polyester present, the recycled polyester can be present in any amount in a blend with virgin polyester. However, the article preferably contains recycled polyester in an amount of from about 10 to 100 weight percent recycled polyester, based on the total weight of polyester present; more preferably, from 30 to 100 percent; more preferably, from 60 to 100 percent. Moreover, the recycled polyester can be either film grade recycled polyester (also referred to as sheet grade recycled polyester) or recycled bottle grade polyester, as can any virgin polyester present.

Film grade polyester usually has an intrinsic viscosity within the range of 0.8 to 1.35 dl/g (preferably 0.8 to 1.25), while bottle grade polyester usually has an intrinsic viscosity of less than or equal to 0.8 dl/g (preferably 0.65-0.8). Virgin polyester usually has a higher intrinsic viscosity than recycled polyester. For example, virgin polyester having an intrinsic viscosity of 0.8 dl/g has an intrinsic viscosity of about 0.7dl/g upon being recycled.

Methods of making cellular cushioning articles, the articles themselves, and machines for making cellular cushioning articles are disclosed. One preferred cushioning article has discrete, independent cells from the lamination (preferably, via heat sealing) of two continuous plastic sheet materials to one another to form a unitary cellular laminate. In fabricating this article, at least one of the continuous plastic sheet materials is heated and then formed (i.e., molded) by means of a female cylinder or other suitable means to form a plurality of individual cells or pockets. As successive portions of the sheet are formed, the surface of the ground portion surrounding each cell is retained at a fusing temperature and the second sheet is heated to a similar temperature and is applied to the ground portion of the first sheet, to form a unitary structure, with each of the molded portions or cells individually sealed to form a plurality of discrete chambers, i.e., "cells", containing air or other fluid permanently sealed therein. While other procedures may be utilized to adhere the films to one another, this heat fusion process has been found to produce the best results, and produces more dependable and durable products.

An alternative preferred embodiment also utilizes two discrete, continuous (preferably flat, i.e., unformed) films which are laminated to each other in a pattern defining inflatable chambers, inflation channels, connecting passageways, and optionally one or more inflation manifolds and an inflation skirt. Upon sealing the films to one another, the chambers can be inflated and the inflation channels sealed to entrap the inflation gas or fluid, thereby providing cushioning chambers, i.e., "bubbles", within the laminate.

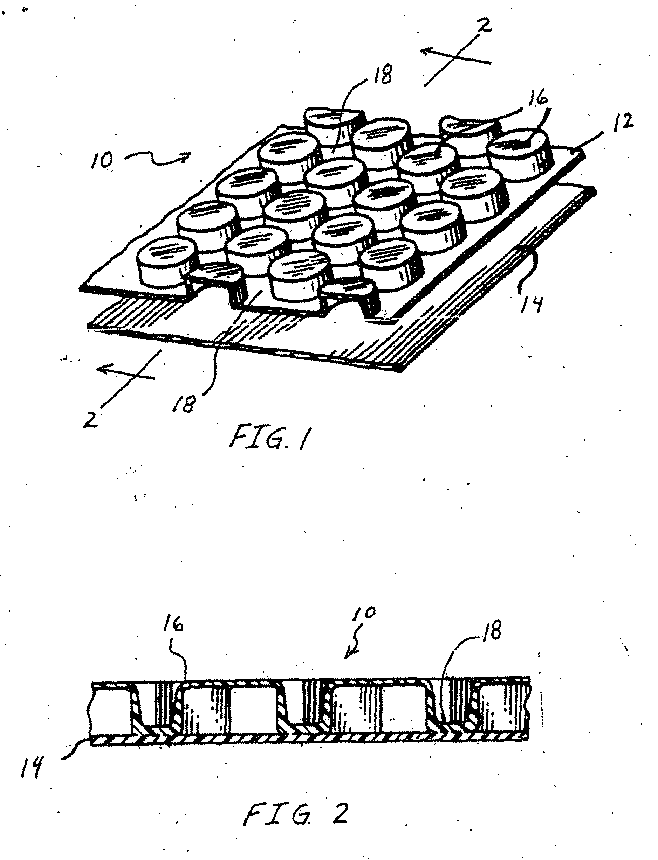

FIG. 1 is an exploded perspective view illustrating a preferred cushioning article 10 having formed first film 12, and unformed, flat laminating film 14. First film 12 has discrete formed portions 16 which emerge as protrusions 16 from flat ground portion 18. Formed portions 16 have a circular cross-section, i.e., a circular "footprint", and a flat top. In FIG. 1, it is evident from the spacing of discrete formed portions 16 that article 10 is capable of providing cushioning for an object to be surrounded by article 10. As both first film 12 and second film 14 are flexible films, it is also evident from the spacing of discrete formed portions 16 and ground portion 18 that article 10 also possesses flexibility to be wrapped around an object to be protected.

FIG. 2 illustrates a cross-sectional view of fully assembled article 10. Preferably, a permanent hermetic heat seal is made between ground portion 18 of first film 12 with contacting portions of laminating film 14. The resulting article provides excellent cushioning and shock absorption. Preferably, the side walls of formed portions 16 taper so that the thinnest portion of the wall is farthest from the laminating sheet 14, as discussed in U.S. Patent No. 3,294,387.

Formed portions 16 may be made of any desired shape or configuration with uniform or tapered walls. Although formed portions 16 are illustrated with a circular cross-sectional shape and a flat top, particularly preferred formed portions have a circular cross-sectional shape with a domed top.

Preferably first and second films have an A/B/C/B/A structure. In a particularly preferred embodiment, the A layers serve as heat seal and abuse layers and together make up 86 percent of the total thickness, each of the B layers making up 2% of the total thickness, and the C layer making up 10% of the total thickness. The C layer serves as an O₂-barrier layer and is made of 100% post-consumer PET Grade No. NLP Clear, having an intrinsic viscosity of 0.71 dl/g, a melting point of 246°C, and a crystallinity of 36%, obtained from Phoenix Technologies of Bowling Green, Ohio. Each of the B layers serve as tie layers and are made of 100% Plexar^{®} PX5332 anhydride modified linear low density polyethylene obtained from Equistar. Each of the A layers is made from a blend of 45% by weight HCX002 linear low density polyethylene having a density of 0.941 g/cc and a melt index of 4, obtained from Mobil, 45% by weight LF10218 low density polyethylene having a density of 0.918 g/cc and a melt index of 2, obtained from Nova, and 10% by weight SLX9103 metallocene-catalyzed ethylene/alpha-olefin copolymer, obtained from Exxon.

Preferably, formed first film 12 has a thickness (before forming) of from 25.4 to 101.6 µm (1 to 4 mils), more preferably from 30.5 to 50.8 µm (1.2 to 2 mils), more preferably about 38.1 µm (1.5 mils). Preferably, flat laminating film has a thickness of from 12.7 to 50.8µm (0.5 to 2 mills), more preferably 12.7 to 38.1 µm (0.5-1.5 mils), more preferably 25.4 µm (1.0 mil). Preferably, the "bubble" in the cushioning article has a height of from 3.2 to 25.4 mm (1/8 inch to 1 inch), and a diameter (or major dimension) of from 3.2 to 76.2 mm (1/8 inch to 3 inches). More preferably, the bubble height is from 6.4 to 12.7 mm (¼ to ½ inch) and the bubble diameter is from 6.4 to 25.4 mm (¼ inch to 1 inch). As the height and diameter of the bubble are increased, preferably the thickness of the first and second films is greater. Preferably, the first film is thicker than the second film.

In certain cases it may be desirable to have a formed film of a fairly thin gauge, as for instance films of the order of 0.025 to 0.127 mm (1 to 5 thousandths of an inch), while the backing film may be relatively stiff to lend support for the structure. Thus, any number of variations may be made in the thickness of the sealed films and the size and configuration of the formed portions, in order to attain any desired shock absorbing action.

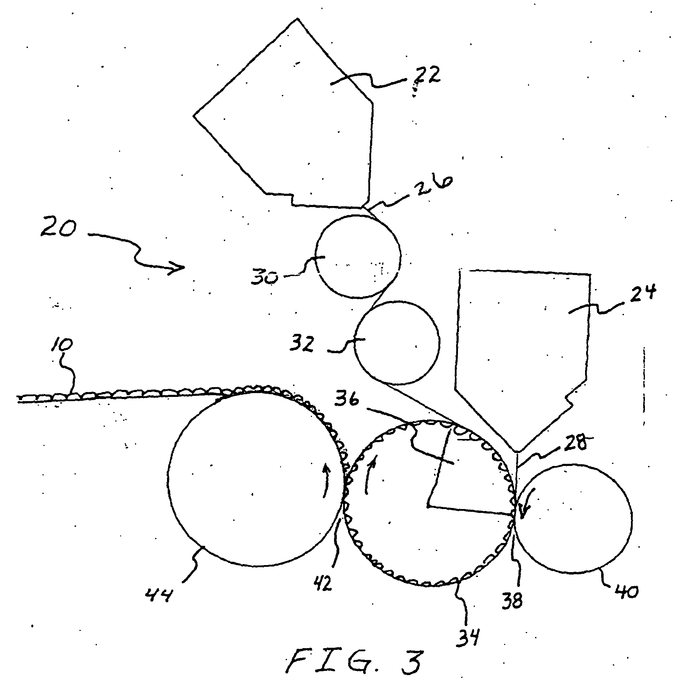

FIG. 3 is a schematic of a particularly preferred apparatus and process 20 for manufacturing an article in accordance with the present invention. In FIG. 3, extruders 22 and 24 extrude first film 26 and second film 28, respectively. After extrusion, first film 26 makes a partial wrap around tempering rollers 30 and 32, which preferably have a diameter of 20.3 cm (8 inches) and which are maintained at a surface temperature well beneath the fusion temperature of the extrudate, e.g., maintained at from 37.8 - 121.1°C (100-250°F). The tempering rollers allow the film to cool to the solid state but keep the film hot enough to undergo forming upon contact with forming roller 34. Upon exiting contact with second roller 32, first film 26 is forwarded into contact with vacuum forming roller 34, which need not be heated but which is preferably heated to about 37.8°C (100°F). First film 26 contacts forming roller 34 over at least a portion (preferably, all) of vacuum zone 36, during which time portions of first film 26 are drawn by vacuum into respective cavities in the surface of forming roller 34, producing formed portions 16 illustrated in FIG. 1. The size and shape of the cavities in forming roller 34 determine the size and shape of the formed portions on first film 26.

As illustrated in FIG. 3, vacuum zone 36 is applied from inside forming roller 34, and is constantly applied to that portion of forming roller 34 which is in the position illustrated in FIG. 3. That is, as forming roller 34 rotates, vacuum is applied to the running portion of forming roller 34 which is over fixed vacuum zone 36.

As the now-formed first film 26 proceeds through nip 38 between forming roller 34 and pressure roller 40, it is merged with second film 28, fresh from extruder 24. While in nip 38, first and second films 26 and 28 are pressed together while hot. The pressing together of films 26 and 28, together with the continued heating of films 26 and 28 as they together pass about half way around heated forming roller 34, and through second nip 42 between forming roller 34 and take-away roller 44, results in a hermetic heat seal between ground portion 18 (see FIG.s 1 and 2) of first film 26 and a corresponding portion of second film 28, resulting in cushioning article 10. Take-away roller 44 pulls cushioning article off of forming roller 34.

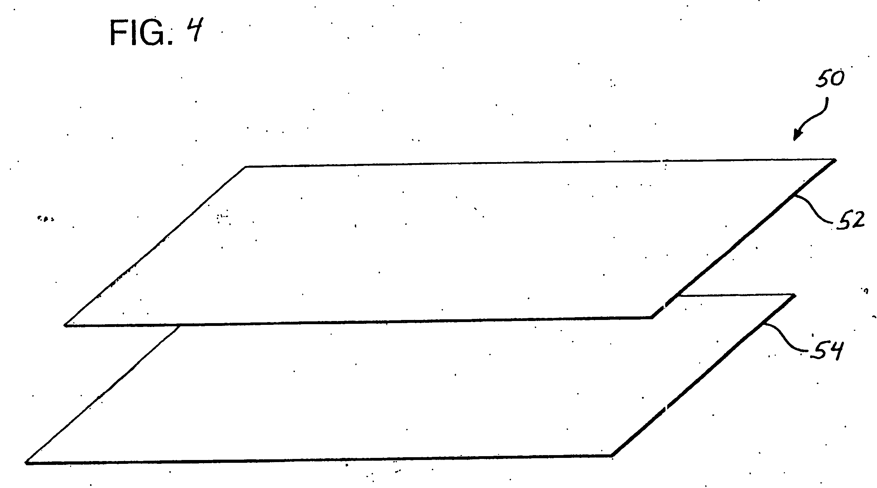

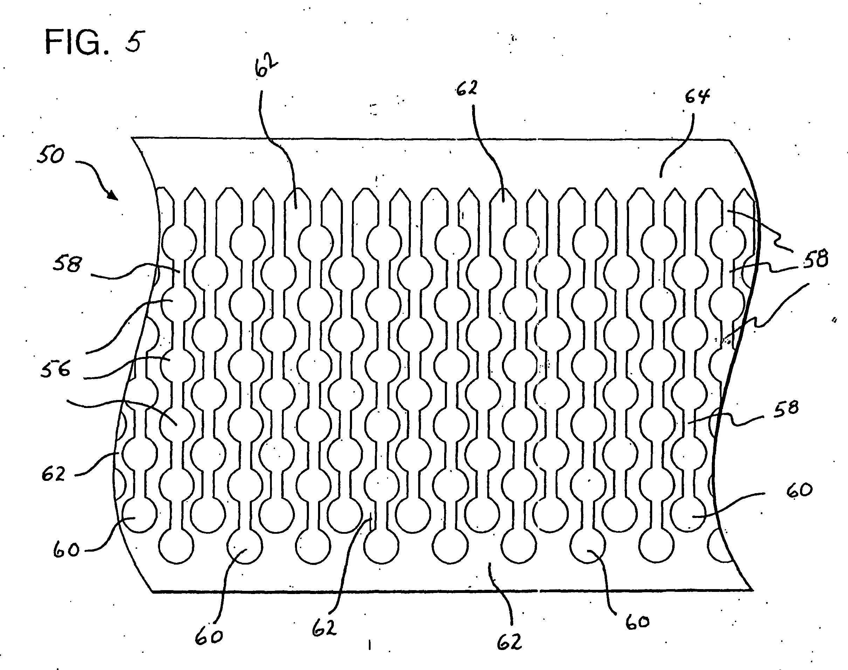

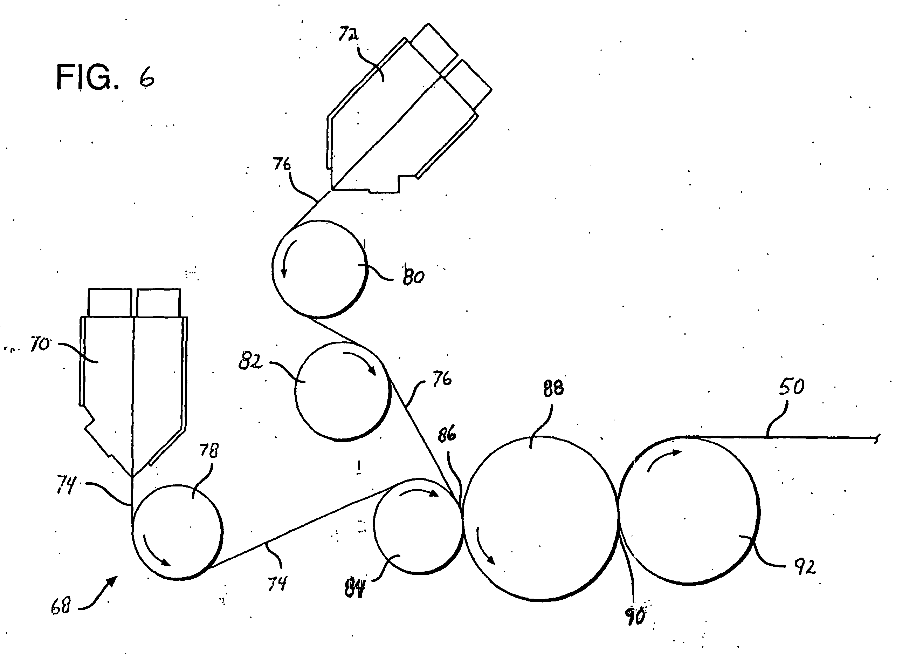

FIG. 4 is an exploded schematic view of a section of an alternative laminated inflatable article 50 produced in accordance with the present invention. FIG. 5 is a lay-flat view from above fully assembled laminated inflatable article 50. Viewing FIG. 4 and FIG. 5 together (in FIG. 4 the pattern of heat sealing has not been included for ease of illustration), inflatable cushioning article 50 comprises first film 52 heat sealed to second film 54 in a heat seal pattern which provides a plurality of inflatable "dead-end" pathways and an open skirt along the length of one machine-direction edge of inflatable article 50. Each dead-end pathway contains a plurality of inflatable air chambers 56 connected in series by inflatable connecting channels 58, ending in terminal air chamber 60. Inflatable cushioning article 50 has continuous heat sealed portion 62. Inflatable cushioning article 50 also has continuous unsealed portion which includes open skirt portion 64, as well as inflatable air chambers 56 and 60, and inflatable connecting channels 58. Heat sealed portion 62 is continuous along the machine direction of inflatable cushioning article 50, with sealed portion 62 corresponding to a preferred raised surface pattern for raised surface roller 88 (see FIG. 6). Unsealed portion 58 is also continuous along the machine direction of article 50, with the complementary unsealed portion corresponding to a preferred recessed surface pattern (i.e., background pattern) of a raised surface roller 88 (again, see FIG. 6). Optionally, the unsealed portion could further include a passageway (not illustrated) in the machine direction which serves as a manifold, i.e. connecting each of the passageways 58 along the open skirt edge of the article. However, open skirt 64 is preferred.

FIG. 6 is a schematic of a preferred apparatus and process 68 for manufacturing inflatable article 50 illustrated in FIG.s 4 and 5. In FIG. 6, extruders 70 and 72 extrude first film 74 and second film 76, respectively. After extrusion, film 74 makes a partial wrap around heat transfer (cooling) roller 78, which preferably has a diameter of 8 inches and which is maintained at a surface temperature well beneath the fusion temperature of the extrudate, e.g., from 37.8 - 65.6°C (100-150°F). Second film 76 makes partial wraps around each of heat transfer (cooling) rollers 80 and 82, each of which has a diameter of 20.3 cm (8 inches) and each of which is maintained at a surface temperature similar to that of cooling roller 78. After cooling, first film 74 makes a partial wrap (about 90 degrees) around nip roll 84, which has a diameter of 20.3 cm (8 inches) and which has, as its primary function, maintaining nip 86 with heat transfer (heating) raised surface roll 88. Nip roll 84 is a rubber roll having a outer coating of polytetrafluoroethylene (e.g., Teflon^{®}). While first film 74 is passing over nip roll 84, second film 76 merges with first film 74, with both films together being wrapped for a short distance around nip roll 84 before together entering first nip 86. Nip roller 84 provides a location at which films 74 and 76 to come together without being marred or distorted.

Thereafter, second film 76 makes direct contact with raised surface roll 88 (which is illustrated as a smooth roll only for simplicity of illustration). First nip 86 subjects films 74 and 76 to a pressure of from 357.2 to 1,786 (2 to 10), preferably 357.2 to 1,071.6 (2 to 6), more preferably about 714.4 grams per centimeter (4 pounds per linear inch).

Films 74 and 76 together contact raised surface roll 88 for a distance of about 180 degrees. Raised surface roll 88 has a diameter of 30.5 cm (12 inches), and is heated by circulating hot oil therethrough so that the surface is maintained at a temperature of from 139 to 177°C (280°F to 350°F), with the edges of the raised surfaces being rounded over to a radius of 0.4 mm (1/64 inch). Raised surface roll 88 has a Teflon^{®} polytetrafluoroethylene coating thereon, with the raised surfaces being above the background by a distance of 0.64 cm (¼ inch). Moreover, the raised surface of raised surface roll 88 is provided with a surface roughness of from 50 to 500 root mean square (i.e., "rms"), preferably 100 to 300 rms, more preferably about 250 rms. This degree of roughness improves the release qualities of raised surface roll 88, enabling faster process speeds and a high quality product which is undamaged by licking back on roll 88.

The raised surface on roll 88 heats that portion of film 76 which it contacts. Heat is transferred from raised surface roll 88, through a heated portion of film 76, to heat a corresponding portion of film 74 to be heat sealed to film 76. Upon passing about 180 degrees around raised surface roll 88, heated films 74 and 76 together pass through second nip 90, which subjects heated films 74 and 76 to about the same pressure as is exerted in first nip 86, resulting in a patterned heat seal between films 74 and 76.

After passing through second nip 90, films 74 and 76, now sealed together, pass about 90 degrees around heat transfer (cooling) roller 92, which has a diameter of 30.5 cm (12 inches) and which has cooling water passing therethrough, the cooling water having a temperature of from 37.8 to 65.6°C (100°F to 150°F). Cooling roller 92 has an about 0.64 cm thick (¼ inch thick) release and heat-transfer coating thereon. The coating is made from a composition designated "SA-B4", which is provided and applied to a metal roller by Silicone Products and Technologies Inc of Lancaster, N.Y. The coating contains silicone rubber to provide cooling roller 74 with a Shore A hardness of from 40 to 100, preferably 50-80, more preferably 50-70, and still more preferably about 60. The SA-B4 composition also contains one or more fillers to increase the heat conductivity to improve the ability of cooling roller 92 to cool the still hot films, now sealed together to result in inflatable article 94, which is thereafter rolled up to form a roll for shipment and subsequent inflation and sealing.

In order to carry out the process at relatively high speed, e.g., speeds of at least 36.6 m (120 feet) per minute, preferably from 45.7 to 91.4 m (150 to 300 feet) per minute, but up to as high as 152.4 m (500 feet) per minute, it has been found to be preferable to provide the manufacturing apparatus with several features. First, raised surface roll 88 should be provided with a release coating or layer, and to also avoid sharp edges which interfere with a clean release of the film from the raised surface roll. As used herein, the phrase "release coating" is inclusive of all release coatings and layers, including polyinfused coatings, applied coatings such as brushed and sprayed coatings which cure on the roll, and even a release tape adhered to the roll. A preferred release coating composition is Teflon^{®} polytetrafluoroethylene. Second, the edges of the raised surfaces should be rounded off to a radius large enough that the film readily releases without snagging on an edge due to its "sharpness" relative to the softened film. Preferably, the radius of curvature is from 0.1 to 9.5 mm (1/256 inch to 3/8 inch), more preferably from 0.2 to 1.6 mm (1/128 inch to 1/16 inch), more preferably from 0.25 to 0.8 mm (1/100 inch to 1/32 inch), and more preferably about 0.4 mm (about 1/64). It is also preferable to provide the cooling roller downstream of, and in nip relationship with, the raised surface roller, with a release coating or layer, as described above.

The process and apparatus illustrated in FIG. 6 can also be supplemented with additional optional components and steps. More particularly, one or both of films 74 and 76 can be preheated to a temperature below their fusing temperature, so that less heat need be added by raised surface roller 88. In this manner, the process can be operated at higher speed, and/or the heat seal may be made stronger or of otherwise higher quality. Preheating can be carried out by, for example, providing nip roller 84 with heating characteristics in addition to providing raised surface roller 88 with heating characteristics. Optionally, additional nips can be provided against raised surface roller 88, to provide additional pressure points for the formation of strong heat seals at high manufacturing speeds.

An important advantage of inflatable cushioning article 50 over cushioning article 10 is that inflatable cushioning article 50 can be shipped uninflated, as an intermediate product of relatively high density, ready for inflation at the location of the end-use.

A particularly preferred film from which inflatable cushioning article 50 is made is the A/B/C/B/A films described above, i.e., in terms of number of layers, relative layer thicknesses, and layer composition. However, in inflatable cushioning article 50, preferably both films have the same thickness. Depending upon the desired end use and the size of the inflatable chambers, preferably the thickness of each film is from 12.7 to 508 µm (0.5 to 20 mils), more preferably from 12.7 to 101.6 µm (0.5 to 4 mils), more preferably 25.4 to 76.2 µm (1 to 3 mils), more preferably 38.1 µm (1.5 mils).

Preferably, the inflated chambers have a diameter of from 19.1 to 101.6 mm (0.75 to 4 inches), more preferably from 25.4 to 50.8 mm (1 to 2 inches). It is preferred that both films have a thickness of from 25.4 to 101.6 µm (1 to 4 mils), more preferably from 30.5 to 50.8 µm (1.2 to 2 mils), more preferably about 38.1 µm (1.5 mils). Preferably, the inflated chambers of the cushioning article have a height of from 1.6 to 50.8 mm (1/16 inch to 2 inches), more preferably from 1.6 to 25.4 mm (1/16 inch to 1 inch), more preferably from 1.6 to 12.7 mm (1/16 inch to ½ inch). Preferably, the inflated chambers have a diameter of from 25.4 to 101.6 mm (1 to 4 inches), more preferably from 25.4 to 76.2 mm (1 to 3 inches), more preferably from 25.4 to 50.8 mm (1 to 2 inches).

In general, the larger the chamber size, the thicker the preferred films. Preferably, the film used to make the cushioning article is as thin as possible, in order to minimize the amount of resin necessary to fabricate the article. However, the film also needs to be thick enough to provide the cushioning article with the durability necessary for the desired end-use. Another consideration in the fabrication of the cellular material in accordance with the invention is that additional shock resisting action is provided as films are increased in thickness.

If desired or necessary, various additives are also included with the films. For example, additives comprise pigments, colorants, fillers, antioxidants, flame retardants, anti-bacterial agents, anti-static agents, stabilizers, fragrances, odor masking agents, anti-blocking agents, slip agents, and the like. Thus, the present invention encompasses employing suitable film constituents.

The inflatable cushioning articles in accordance with the present invention resist popping when pressure is applied to a localized area because channels of air between chambers provide a cushioning effect. The laminates also show excellent creep resistance and cushioning properties due to inter-passage of air between bubbles.

The various terms and phrases utilized throughout this document are to be given their ordinary meaning as understood by those of skill in the art (see also U.S. Patent No. 6,333,061, to Vadhar, entitled "Packaging Article", issued December 25, 2001).

## Claims

1. A cellular cushioning article comprising:
(A) a first multilayer film having first and second outer layers each of which contains an olefin-based polymer, and an inner O₂-barrier layer; and
(B) a second multilayer film having first and second outer layers each of which contains an olefin-based polymer, and an inner O₂-barrier layer;
wherein at least the inner O₂-barrier layer of the first multilayer film, or the inner O₂-barrier layer of the second multilayer film, comprises recycled polyester, and the first multilayer film is laminated to the second multilayer film so that a plurality of cells are formed between the first multilayer film and the second multilayer film.

2. The cellular cushioning article according to Claim I, wherein both the first inner O₂-barrier layer and the second inner O₂-barrier layer comprise recycled polyester.

3. The cellular cushioning article according to Claim 1 or 2, wherein:
(A) the outer layers of the first film each comprise at least one member selected from the group consisting of low density polyethylene, linear low density polyethylene, very low density polyethylene, and homogeneous ethylene/alpha-olefin copolymer; and
(B) the outer layers of the second film each comprise at least one member selected from the group consisting of low density polyethylene, linear low density polyethylene, very low density polyethylene, and homogeneous ethylene/alpha-olefin copolymer.

4. The cellular cushioning article according to Claim 3, wherein:
(A) the first film further comprises a first tie layer between the first outer layer and the O₂-barrier layer, and a second tie layer between the second outer layer and the O₂-barrier layer; and
(B) the second film further comprises a third tie layer between the first outer layer and the O₂-barrier layer, and a fourth the layer between the second outer layer and the O₂-barrier layer.

5. The cellular cushioning article according to Claim 4, wherein:
the first tie layer comprises at least one member selected from the group consisting of anhydride-modified ethylene/alpha-olefin copolymer, ethylene/unsaturated ester copolymer, and ethylene/unsaturated acid copolymer;
the second tie layer comprises at least one member selected from the group consisting of anhydride-modified ethylene/alpha-olefin copolymer, ethylene/unsaturated ester copolymer, and ethylene/unsaturated acid copolymer;
the third tie layer comprises at least one member selected from the group consisting of anhydride-modified ethylene/alpha-olefin copolymer, ethylene/unsaturated ester copolymer, and ethylene/unsaturated acid copolymer; and
the fourth tie layer comprises at least one member selected from the group consisting of anhydride-modified ethylene/alpha-olefin copolymer, ethylene/unsaturated ester copolymer, and ethylene/unsaturated acid copolymer.

6. The cellular cushioning article according to any preceding claim, wherein the first multilayer film is a flat, unformed film and the second multilayer film is a flat, unformed film.

7. The cellular cushioning article according to Claim 6, wherein the first and second films are sealed to one another to form a plurality of cell series, each of the cell series containing a plurality of cells and a passageway connecting the cells to one another in series, the series having a dead-end, the passageway and cells in the series being inflated by an inflation fluid, with the passageway being sealed shut so that the cells in the series remain inflated.

8. The cellular cushioning article according to any of claims 1 to 5, wherein a plurality of discrete cavities have been formed into the first film at spaced intervals having a ground region therebetween, and the second film is a flat film adhered to the first film in the ground region, with the first and second films encapsulating a fluid within each of the discrete cavities.

9. The cellular cushioning article according to any of claims 1 to 5, wherein a plurality of discrete cavities are formed at spaced intervals into both the first film and the second film, each of the films having a ground region between the discrete cavities, with at least a portion of the ground regions of the films being adhered to one another, with the cavities of the first and second films containing a fluid therewithin.

10. The cellular cushioning article according to any preceding claim, wherein the recycled polyester is present in the inner O₂-barrier layer of the first multilayer film, or the inner O₂-barrier layer of the second multilayer film, in an amount of from 10 to 100%, based on polyester present in the layer.

11. The cellular cushioning article according to any preceding claim, wherein the recycled polyester is present in the inner O₂-barrier layer of the first multilayer film, or the inner O₂-barrier layer of the second multilayer film, in an amount of from 30 to 100%, based on polyester present in the layer.

12. The cellular cushioning article according to any preceding claim, wherein the recycled polyester is present in the inner O₂-barrier layer of the first multilayer film, or the inner O₂-barrier layer of the second multilayer film, in an amount of from 60 to 100%, based on polyester present in the layer.

13. The cellular cushioning article according to any preceding claim, wherein the recycled polyester is present in the inner O₂-barrier layer of the first multilayer film, or the inner O₂-barrier layer of the second multilayer film, in an amount of 100%, based on total polyester present in the layer.

14. The cellular cushioning article according to any of claims 1 to 12, wherein the O₂-barrier layer comprises a blend of recycled polyethylene terephthalate and virgin polyethylene terephthalate.

15. The cellular cushioning article according to any preceding claim, wherein the recycled polyester comprises recycled polyester having an intrinsic viscosity of less than or equal to 0.8 deciliter per gram.

16. The cellular cushioning article according to any of claims 1 to 14, wherein the recycled polyester comprises recycled polyester having an intrinsic viscosity of from 0.8 to 1.25 deciliter per gram.

17. The cellular cushioning article according to any preceding claim, wherein the first film has a thickness of from 5.1 to 254 µm (0:2 to 10 mils), and the second film has a thickness of from 5.1 to 254 µm (0.2 to 10 mils).

18. A process for making the cushioning article of any preceding claim, comprising the steps of:
(A) extruding a first multilayer film having first and second outer layers each of which contains an olefin-based polymer, and an inner O₂-barrier layer; and
(B) extruding a second multilayer film having first and second outer layers each of which contains an olefin-based polymer, and an inner O₂-barrier layer; and
(C) adhering the first and second multilayer films to one another so that a plurality of cells are formed; and
wherein the inner O₂-barrier layer of the first multilayer film, or the inner O₂-barrier layer of the second multilayer film, contain recycled polyester.

19. The process according to Claim 18, further comprising forming a plurality of discrete cavities into the first film at spaced intervals having a ground region therebetween, the forming being carried out after extruding the first multilayer film but before adhering the first multilayer film to the second multilayer film, with the ground region of the first film being adhered to the second film, so that upon adhering the first and second multilayer films to one another, the first and second films together encapsulate a fluid within the each of the discrete cavities.

20. The process according to Claim 19, wherein the forming is carried out by passing the film over a forming roller which draws discrete regions of the film into forming cavities by evacuating atmosphere from regions between the film and the forming cavity.

21. The process according to Claim 19 or 20, wherein the fluid is air.

22. The process according to Claim 18, further comprising forming a plurality of discrete cavities into both the first multilayer film and the second multilayer film, the plurality of discrete cavities being at spaced intervals having a ground region therebetween, the forming being carried out after extruding the first and second multilayer films but before adhering the first multilayer film to the second multilayer film, with the ground region of the first film being adhered to the ground region of the second film, so that upon adhering the first and second multilayer films to one another, the first and second films together encapsulate a fluid within the each of the discrete cavities.

23. The process according to Claim 22, wherein the fluid is air.

24. The process according to Claim or 23 wherein the ground region of the first film is heat sealed to the ground region of the second film.

25. The process according to Claim 19 wherein the first and second films are heat sealed to one another to form an inflatable cushioning article having a series of cells, each of the series of cells containing a plurality of cells and a passageway connecting the cells to one another, each series of cells having a dead-end, the passageway and cells in the series being capable of being inflated by an inflation fluid, with the passageway being capable of being sealed shut so that the cells in each of the series can remain inflated.

26. The process according to Claim 25, wherein the inflatable cushioning article has an open skirt along one machine-direction edge.

## Patentansprüche

1. Zellulärer Polstergegenstand, der
(A) eine erste Mehrschichtfolie mit ersten und zweiten äußeren Schichten, die jeweils ein Polymer auf Olefinbasis enthalten, und einer innere O₂-Barriereschicht, und
(B) eine zweite Mehrschichtfolie mit ersten und zweiten äußeren Schichten, die jeweils ein Polymer auf Olefinbasis enthalten, und einer inneren O₂-Barriereschicht umfasst,
wobei mindestens die innere O₂-Barriereschicht der ersten Mehrschichtfolie oder die innere O₂-Barriereschicht der zweiten Mehrschichtfolie Recycling-Polyester umfasst und die erste Mehrschichtfolie so an die zweite Mehrschichtfolie laminiert ist, dass eine Vielzahl von Zellen zwischen der ersten Mehrschichtfolie und der zweiten Mehrschichtfolie gebildet wird.

2. Zellulärer Polstergegenstand nach Anspruch 1, bei dem sowohl die erste innere O₂-Barriereschicht als auch die zweite innere O₂-Barriereschicht Recycling-Polyester umfassen.

3. Zellulärer Polstergegenstand nach Anspruch 1 oder 2, bei dem
(A) die äußeren Schichten der ersten Folie jeweils mindestens ein Mitglied ausgewählt aus der Gruppe bestehend aus Polyethylen niedriger Dichte, linearem Polyethylen niedriger Dichte, Polyethylen sehr niedriger Dichte und homogenem Ethylen/α-Olefin-Copolymer umfassen, und
(B) die äußeren Schichten der zweiten Folie jeweils mindestens ein Mitglied ausgewählt aus der Gruppe bestehend aus Polyethylen niedriger Dichte, linearem Polyethylen niedriger Dichte, Polyethylen sehr niedriger Dichte und homogenem Ethylen/α-Olefin-Copolymer umfassen.

4. Zellulärer Polstergegenstand nach Anspruch 3, bei dem
(A) die erste Folie ferner eine erste Verbindungsschicht zwischen der ersten äußeren Schicht und der O₂-Barriereschicht und eine zweite Verbindungsschicht zwischen der zweiten äußeren Schicht und der O₂-Barriereschicht umfasst, und
(B) die zweite Folie ferner eine dritte Verbindungsschicht zwischen der ersten äußeren Schicht und der O₂-Barriereschicht und eine vierte Verbindungsschicht zwischen der zweiten äußeren Schicht und der O₂-Barriereschicht umfasst.

5. Zellulärer Polstergegenstand nach Anspruch 4, bei dem
die erste Verbindungsschicht mindestens ein Mitglied ausgewählt aus der Gruppe bestehend aus anhydridmodifiziertem Ethylen/α-Olefin-Copolymer, Ethylen/ungesättigtem Ester-Copolymer und Ethylen/ungesättigtem Säure-Copolymer umfasst;
die zweite Verbindungsschicht mindestens ein Mitglied ausgewählt aus der Gruppe bestehend aus anhydridmodifiziertem Ethylen/α-Olefin-Copolymer, Ethylen/ungesättigtem Ester-Copolymer und Ethylen/ ungesättigtem Säure-Copolymer umfasst;
die dritte Verbindungsschicht mindestens ein Mitglied ausgewählt aus der Gruppe bestehend aus anhydridmodifiziertem Ethylen/α-Olefin-Copolymer, Ethylen/ungesättigtem Ester-Copolymer und Ethylen/ ungesättigtem Säure-Copolymer umfasst, und
die vierte Verbindungsschicht mindestens ein Mitglied ausgewählt aus der Gruppe bestehend aus anhydridmodifiziertem Ethylen/α-Olefin-Copolymer, Ethylen/ungesättigtem Ester-Copolymer und Ethylen/ ungesättigtem Säure-Copolymer umfasst.

6. Zellulärer Polstergegenstand nach einem der vorhergehenden Ansprüche, bei dem die erste Mehrschichtfolie eine flache, ungeformte Folie ist und die zweite Mehrschichtfolie eine flache, ungeformte Folie ist.

7. Zellulärer Polstergegenstand nach Anspruch 6, bei dem die erste und zweite Folie aneinander gesiegelt sind, um eine Vielzahl von Zellreihen, wobei jede der Zellreihen mehrere Zellen enthält, und einen Durchgang zu bilden, der die Zellen miteinander in Reihe verbindet, wobei die Reihen ein totes Ende haben, der Durchgang und die Zellen in den Reihen durch ein Aufblasfluid aufgeblasen sind, wobei der Durchgang durch Siegeln verschlossen ist, so dass die Zellen in der Reihe aufgeblasen bleiben.

8. Zellulärer Polstergegenstand nach einem der Ansprüche 1 bis 5, bei dem eine Vielzahl von diskreten Hohlräumen in beabstandeten Intervallen in der ersten Folie ausgebildet ist, zwischen denen ein Grundbereich liegt, und die zweite Folie eine flache Folie ist, die in dem Grundbereich an die erste Folie geklebt ist, wobei die erste und zweite Folie ein Fluid in jedem der diskreten Hohlräume einschließen.

9. Zellulärer Polstergegenstand nach einem der Ansprüche 1 bis 5, bei dem eine Vielzahl von diskreten Hohlräumen in beabstandeten Intervallen sowohl in der ersten Folie als auch in der zweiten Folie ausgebildet sind, jede der Folien einen Grundbereich zwischen den diskreten Hohlräumen aufweist, mindestens ein Teil der Grundbereiche der Folien aneinander geklebt ist und die Hohlräume der ersten und zweiten Folien ein Fluid enthalten.

10. Zellulärer Polstergegenstand nach einem der vorhergehenden Ansprüche, bei dem der Recycling-Polyester in der inneren O₂-Barriereschich der ersten Mehrschichtfolie oder der inneren O₂-Barriereschicht der zweiten Mehrschichtfolie in einer Menge von 10 bis 100 % vorhanden ist, bezogen auf den in der Schicht vorhandenen Polyester.

11. Zellulärer Polstergegenstand nach einem der vorhergehenden Ansprüche, bei dem der Recycling-Polyester in der inneren O₂-Barriereschicht der ersten Mehrschichtfolie oder der inneren O₂-Barriereschicht der zweiten Mehrschichtfolie in einer Menge von 30 bis 100 % vorhanden ist, bezogen auf den in der Schicht vorhandenen Polyester.

12. Zellulärer Polstergegenstand nach einem der vorhergehenden Ansprüche, bei dem der Recycling-Polyester in der inneren O₂-Barriereschicht der ersten Mehrschichtfolie oder der inneren O₂-Barriereschicht der zweiten Mehrschichtfolie in einer Menge von 60 bis 100 % vorhanden ist, bezogen auf den in der Schicht vorhandenen Polyester.

13. Zellulärer Polstergegenstand nach einem der vorhergehenden Ansprüche, bei dem der Recycling-Polyester in der inneren O₂-Barriereschicht der ersten Mehrschichtfolie oder der inneren O₂-Barriereschicht der zweiten Mehrschichtfolie in einer Menge von 100 % vorhanden ist, bezogen auf den in der Schicht vorhandenen Polyester.

14. Zellulärer Polstergegenstand nach einem der Ansprüche 1 bis 12, bei dem die O₂-Barriereschicht ein Gemisch aus Recycling-Polyethylenterephthalat und jungfräulichem Polyethylenterephthalat umfasst.

15. Zellulärer Polstergegenstand nach einem der vorhergehenden Ansprüche, bei dem der Recycling-Polyester Recycling-Polyester mit einer Strukturviskosität von weniger als oder gleich 0,8 Deziliter pro Gramm umfasst.

16. Zellulärer Polstergegenstand nach einem der Ansprüche 1 bis 14, bei dem der Recycling-Polyester Recycling-Polyester mit einer Strukturviskosität von 0,8 bis 1,25 Dezilitern pro Gramm umfasst.

17. Zellulärer Polstergegenstand nach einem der vorhergehenden Ansprüche, bei dem die erste Folie eine Dicke von 5,1 bis 254 µm (0,2 bis 10 mil) hat und die zweite Folie eine Dicke von 5,1 bis 254 µm (0,2 bis 10 mil) hat.

18. Verfahren zur Herstellung des Polstergegenstands nach einem der vorhergehenden Ansprüche, bei dem
(A) eine erste Mehrschichtfolie mit ersten und zweiten äußeren Schichten, die jeweils ein Polymer auf Olefinbasis enthalten, und einer inneren O₂-Barriereschicht extrudiert wird und
(B) eine zweite Mehrschichtfolie mit ersten und zweiten äußeren Schichten, die jeweils ein Polymer auf Olefinbasis enthalten, und einer inneren O₂-Barriereschicht extrudiert wird und
(C) die erste und zweite Mehrschichtfolie aneinander geklebt werden, so dass eine Vielzahl von Zellen gebildet wird, und
wobei die innere O₂-Barriereschicht der ersten Mehrschichtfolie oder die innere O₂-Barriereschicht der zweiten Mehrschichtfolie Recycling-Polyester enthält.

19. Verfahren nach Anspruch 18, bei dem ferner eine Vielzahl von diskreten Hohlräumen in beabstandeten Intervallen in der ersten Folie geformt wird, zwischen denen ein Grundbereich liegt, wobei das Formen durchgeführt wird, nachdem die erste Mehrschichtfolie extrudiert worden ist, jedoch bevor die erste Mehrschichtfolie an die zweite Mehrschichtfolie geklebt worden ist, wobei der Grundbereich der ersten Folie an die zweite Folie geklebt wird, so dass die erste und die zweite Folie, wenn die erste und zweite Mehrschichtfolie aneinander geklebt werden, zusammen ein Fluid in jedem der diskreten Hohlräume einschließen.

20. Verfahren nach Anspruch 19, bei dem das Formen durchgeführt wird, indem die Folie über eine Formungswalze geleitet wird, die diskrete Bereiche der Folie in Formungshohlräume zieht, indem die Atmosphäre aus Bereichen zwischen der Folie und dem Formungshohlraum evakuiert wird.

21. Verfahren nach Anspruch 19 oder 20, bei dem das Fluid Luft ist.

22. Verfahren nach Anspruch 18, bei dem ferner eine Vielzahl von diskreten Hohlräumen in sowohl der ersten Mehrschichtfolie als auch der zweiten Mehrschichtfolie geformt werden, wobei die mehreren diskreten Hohlräume in beabstandeten Intervallen mit einem Grundbereich dazwischen vorliegen, das Formen durchgeführt wird, nachdem die erste und zweite Mehrschichtfolie extrudiert worden sind, jedoch bevor die erste Mehrschichtfolie an die zweite Mehrschichtfolie geklebt worden ist, wobei der Grundbereich der ersten Folie an den Grundbereich der zweiten Folie geklebt wird, so dass die erste und die zweite Folie, wenn die erste und zweite Mehrschichtfolie aneinander geklebt werden, zusammen ein Fluid in jedem der diskreten Hohlräume einschließen.

23. Verfahren nach Anspruch 22, bei dem das Fluid Luft ist.

24. Verfahren nach Anspruch 22 oder 23, bei dem der Grundbereich der ersten Folie an den Grundbereich der zweiten Folie heißgesiegelt wird.

25. Verfahren nach Anspruch 19, bei dem die erste und zweite Folie aneinander heißgesiegelt werden, um einen aufblasbaren Polstergegenstand mit einer Reihe von Zellen zu bilden, wobei jede der Reihen von Zellen eine Vielzahl von Zellen und einen Durchgang enthält, der die Zellen miteinander verbindet, jede Reihe von Zellen ein totes Ende aufweist, wobei der Durchgang und die Zellen in den Reihen durch ein Aufblasfluid aufgeblasen werden können, und der Durchgang durch Siegeln verschlossen werden kann, so dass die Zellen in der Reihe aufgeblasen bleiben.

26. Verfahren nach Anspruch 25, bei dem der aufblasbare Polstergegenstand entlang eines Randes in Maschinenrichtung einen offenen Randbereich aufweist.

## Revendications

1. Article de matelassage alvéolaire comprenant:
(A) un premier film multicouche ayant des première et seconde couches externes dont chacune contient un polymère à base d'oléfine, et une couche de barrière contre O₂; et
(B) un second film multicouche ayant des première et seconde couches externes dont chacune contient un polymère à base d'oléfine, et une couche de barrière contre O₂;
dans lequel au moins la couche de barrière contre O₂ du premier film multicouche, ou la couche de barrière contre O₂ du second film multicouche, comprend du polyester recyclé, et le premier film multicouche est stratifié sur le second film multicouche de sorte qu'une pluralité d'alvéoles sont formées entre le premier film multicouche et le second film multicouche.

2. Article de matelassage alvéolaire selon la revendication 1, dans lequel la première couche de barrière contre O₂ et la seconde couche de barrière contre O₂ comprennent du polyester recyclé.

3. Article de matelassage alvéolaire selon la revendication 1 ou 2, dans lequel:
(A) les couches externes du premier film comprennent chacune au moins un membre choisi dans le groupe constitué d'un polyéthylène basse densité, un polyéthylène basse densité linéaire, un polyéthylène très basse densité, et un copolymère éthylène/alpha-oléfine homogène; et
(B) les couches externes du second film comprennent chacune au moins un membre choisi dans le groupe constitué d'un polyéthylène basse densité, un polyéthylène basse densité linéaire, un polyéthylène très basse densité, et un copolymère éthylène/alpha-oléfine homogène.

4. Article de matelassage alvéolaire selon la revendication 3, dans lequel:
(A) le premier film comprend en outre une première couche de liaison entre la première couche externe et la couche de barrière contre O₂, et une deuxième couche de liaison entre la seconde couche externe et la couche de barrière contre O₂; et
(B) le second film comprend en outre une troisième couche de liaison entre la première couche externe et la couche de barrière contre O₂, et une quatrième couche de liaison entre la seconde couche externe et la couche de barrière contre O₂.

5. Article de matelassage alvéolaire selon la revendication 4, dans lequel:
la première couche de liaison comprend au moins un membre choisi dans le groupe constitué d'un copolymère éthylène modifié par un anhydride/alpha-oléfine, un copolymère éthylène/ester insaturé, et un copolymère éthylène/acide insaturé;
la deuxième couche de liaison comprend au moins un membre choisi dans le groupe constitué d'un copolymère éthylène modifié par un anhydride/alpha-oléfine, un copolymère éthylène/ester insaturé, et un copolymère éthylène/acide insaturé;
la troisième couche de liaison comprend au moins un membre choisi dans le groupe constitué d'un copolymère éthylène modifié par un anhydride/alpha-oléfine, un copolymère éthylène/ester insaturé, et un copolymère éthylène/acide insaturé; et
la quatrième couche de liaison comprend au moins un membre choisi dans le groupe constitué d'un copolymère éthylène modifié par un anhydride/alpha-oléfine, un copolymère éthylène/ester insaturé, et un copolymère éthylène/acide insaturé.

6. Article de matelassage alvéolaire selon l'une quelconque des revendications précédentes, dans lequel le premier film multicouche est un film plat, non formé et le second film multicouche est un film plat, non formé.

7. Article de matelassage alvéolaire selon la revendication 6, dans lequel les premier et second films sont scellés l'un à l'autre pour former une pluralité de séries d'alvéoles, chacune des séries d'alvéoles contenant une pluralité de cellules et une voie de passage raccordant les alvéoles les unes aux autres en série, les séries ayant un cul-de-sac, la voie de passage et les alvéoles dans les séries étant gonflées par un fluide de gonflage, la voie de passage étant fermée de manière étanche de sorte que les alvéoles dans les séries restent gonflées.

8. Article de matelassage alvéolaire selon l'une quelconque des revendications 1 à 5, dans lequel une pluralité de cavités discrètes ont été formées dans le premier film à des intervalles espacés ayant une région de base entre celles-ci, et le second film est un film plat adhérant au premier film dans la région de base, les premier et second films encapsulant un fluide dans chacune des cavités discrètes.

9. Article de matelassage alvéolaire selon l'une quelconque des revendications 1 à 5, dans lequel une pluralité de cavités discrètes sont formées à des intervalles espacés dans le premier film et le second film, chacun des films ayant une région de base entre les cavités discrètes, au moins une partie des régions de base des films adhérant les unes aux autres, les cavités des premier et second films contenant un fluide dans celles-ci.

10. Article de matelassage alvéolaire selon l'une quelconque des revendications précédentes, dans lequel le polyester recyclé est présent dans la couche de barrière contre O₂ du premier film multicouche, ou la couche de barrière contre O₂ du second film multicouche, en une quantité de 10 à 100 %, sur la base du polyester présent dans la couche.

11. Article de matelassage alvéolaire selon l'une quelconque des revendications précédentes, dans lequel le polyester recyclé est présent dans la couche de barrière contre O₂ du premier film multicouche, ou la couche de barrière contre O₂ du second film multicouche, en une quantité de 30 à 100 %, sur la base du polyester présent dans la couche.

12. Article de matelassage alvéolaire selon l'une quelconque des revendications précédentes, dans lequel le polyester recyclé est présent dans la couche de barrière contre O₂ du premier film multicouche, ou la couche de barrière contre O₂ du second film multicouche, en une quantité de 60 à 100 %, sur la base du polyester total présent dans la couche.

13. Article de matelassage alvéolaire selon l'une quelconque des revendications précédentes, dans lequel le polyester recyclé est présent dans la couche de barrière contre O₂ du premier film multicouche, ou la couche de barrière contre O₂ du second film multicouche, en une quantité de 100 %, sur la base du polyester total présent dans la couche.

14. Article de matelassage alvéolaire selon l'une quelconque des revendications 1 à 12, dans lequel la couche de barrière contre O₂ comprend un mélange de polyéthylène-téréphtalate recyclé et de polyéthylène-téréphtalate vierge.

15. Article de matelassage alvéolaire selon l'une quelconque des revendications précédentes, dans lequel le polyester recyclé comprend un polyester recyclé ayant une viscosité intrinsèque de moins de ou égale à 0,8 décilitre par gramme.

16. Article de matelassage alvéolaire selon l'une quelconque des revendications 1 à 14, dans lequel le polyester recyclé comprend un polyester recyclé ayant une viscosité intrinsèque de moins de 0,8 à 1,25 décilitre par gramme.

17. Article de matelassage alvéolaire selon l'une quelconque des revendications précédentes, dans lequel le premier film a une épaisseur de 5,1 à 254 µm (0,2 à 10 mils) et le second film a une épaisseur de 5,1 à 254 µm (0,2 à 10 mils).

18. Procédé pour fabriquer l'article de matelassage de l'une quelconque des revendications précédentes, comprenant les étapes consistant à:
(A) extruder un premier film multicouche ayant des première et seconde couches externes dont chacune contient un polymère à base d'oléfine, et une couche de barrière contre O₂; et
(B) extruder un second film multicouche ayant des première et seconde couches externes dont chacune contient un polymère à base d'oléfine, et une couche de barrière contre O₂; et
(C) coller les première et seconde films multicouches l'un à l'autre de sorte qu'une pluralité d'alvéoles sont formées; et
dans lequel la couche de barrière contre O₂ du premier film multicouche, ou la couche de barrière contre O₂ du second film multicouche, contiennent du polyester recyclé.

19. Procédé selon la revendication 18, comprenant en outre le formage d'une pluralité de cavités discrètes dans le premier film à des intervalles espacés ayant une région de base entre celles-ci, le formage étant effectué après l'extrusion du premier film multicouche avant de coller le premier film multicouche au second film multicouche, la région de base du premier film étant collée au second film, de sorte que lors de l'adhésion des premier et second films multicouches l'un à l'autre, les premier et second films encapsulent conjointement un fluide dans chacune des cavités discrètes.

20. Procédé selon la revendication 19, dans lequel le formage est effectué par passage du film sur un rouleau de formage qui étire des régions discrètes du film en formant des cavités en évacuant l'atmosphère de régions entre le film et la cavité formée.

21. Procédé selon la revendication 19 ou 20, dans lequel le fluide est l'air.

22. Procédé selon la revendication 18, comprenant en outre le formage d'une pluralité de cavités discrètes dans le premier film multicouche et le second film multicouche, la pluralité de cavités discrètes étant à des intervalles espacés ayant une région de base entre celles-ci, le formage étant effectué après l'extrusion des premier et second films multicouches mais avant l'adhésion du premier film multicouche au second film multicouche, la région de base du premier film étant collée à la région de base du second film, de sorte qu'après l'adhésion des premier et second films multicouches l'un à l'autre, les premier et second films encapsulent conjointement un fluide dans chacune des cavités discrètes.

23. Procédé selon la revendication 22, dans lequel le fluide est l'air.

24. Procédé selon la revendication 22 ou 23 dans lequel la région de base du premier film est thermoscellée à la région de base du second film.

25. Procédé selon la revendication 19 dans lequel les premier et second films sont thermoscellés l'un à l'autre pour former un article de matelassage alvéolaire comprenant une série d'alvéoles, chacune des séries d'alvéoles contenant une pluralité d'alvéoles et une voie de passage reliant les alvéoles les unes aux autres, chaque série d'alvéoles ayant un cul-de-sac, la voie de passage et les alvéoles dans les séries pouvant être gonflées par un fluide de gonflage, la voie de passage pouvant être fermée de manière étanche de sorte que les alvéoles dans chacune des séries puissent rester gonflées.

26. Procédé selon la revendication 25, dans lequel l'article de matelassage alvéolaire a une collerette ouverte le long d'un bord dans le sens machine.
